# EUROPEAN PATENT APPLICATION

(11) **EP 1 607 895 A2**
(43) Date of publication of application: **21.12.2005**
(21) Application number: 05104999.7
(22) Date of filing: 08.06.2005
(51) Int. Cl.: G06F 17/60

(54) **Method and system for restarting a project management system scheduling engine based on user input of contractual start/ finish data**

(30) Priority: 15.06.2004 US 868517
(71) Applicant: MICROSOFT CORPORATION, Redmond, WA 98052 (US)
(72) Inventor: Schultz, Edward Jerry, 98052, Redmond (US)
(74) Representative: Grünecker, Kinkeldey, Stockmair & Schwanhäusser Anwaltssozietät

(57) **Abstract**

Methods and systems are provided for managing automated project management scheduling based on user input of contractual project milestone start and/or finish data. A project scheduling engine may be managed by provision of contractual start/finish data. The scheduling engine may restart a project management schedule at any point in the schedule based on the contractual scheduling data provided by a user of the schedule. Thus, a user of the schedule may manage one or more portions of the overall project management schedule without manually amending the schedule or breaking scheduling dependencies to cause the schedule to arbitrarily fit an initial schedule.

## Description

### Field of the Invention

The present invention generally relates to project management methods and systems. More particularly, the present invention relates to methods and systems for preparing project management schedules based on user input of contractual start/finish data for project milestones.

### Background of the Invention

With the advent of the computer age, computer and software users have grown accustomed to user-friendly software applications that help them write, calculate, organize, prepare presentations, send and receive electronic mail, make music, and the like. Modem word processing applications, for example, allow users to create and edit a variety of useful documents. Modem project management applications, for another example, allow users to create project management schedules for organizing and managing tasks, resources and labor associated with a variety of projects.

Manual and computerized project management systems allow managers and planners to organize and plan the tasks, resources and schedules required for completion of a given project. In most projects, a number of dependencies and constraints dictate the timing and completion of an overall project and of sub-projects comprising the overall project. For example, in a house construction project, a drywall sub-project may not typically begin until the completion of electrical work. And, a number of sub-projects may be constrained by the availability of labor and resources. Project management software applications have been developed for creating and automating project management schedules. With many such systems, tasks or sub-projects comprising an overall project are set out in scheduling charts, such as Gantt Charts, showing start dates and finish dates for given milestones and associated tasks comprising the overall project and providing information regarding utilized resources and constraints associated with the milestones and tasks comprising the project.

A typical project management system includes a scheduling engine that is responsible for calculating the start dates and finish dates of project milestones and individual project tasks comprising project milestones based on user provided data including task start dates, resources, constraints and dependencies. The scheduling engine is typically responsible for maintaining the relationships between milestones and tasks of a given project based on such project information. For example, if a given project contains three milestones or project phases and a dependency provided to the scheduling engine requires that a second milestone may not begin until a first milestone is completed, the scheduling engine will maintain this relationship even if the entire project management schedule must be periodically recalculated. For example, if completion of a task contained in the first milestone slips by two weeks causing completion of the first milestone to slip by two weeks, the scheduling engine will automatically push the start date of the second milestone out two weeks in order to maintain the dependency of the second milestone on the first milestone.

Unfortunately, such automatic recalculation and reconstruction of the project management schedule may reduce the value of the schedule to project managers because the schedule becomes a mere snapshot of the presently calculated and displayed project schedule without regard to the management of individual portions (sub-projects) of a given project by managers of those portions of the project. For example, the manager of the first project milestone, described above, may know that the first milestone will be completed as originally scheduled notwithstanding the slippage or apparent slippage of one or more of the tasks included in the first milestone. For example, the manager may know that he/she will utilize more resources for one or more slipping tasks if needed to ultimately complete the task on time.

Under prior project management systems, the manager has no way of preventing the automatic recalculation of the overall project schedule by the scheduling engine unless the manager either manually inserts an artificial finish date for the slipping tasks or breaks the dependency link between the first milestone and other milestones to prevent the automatic recalculation and amendment of the overall schedule. Such maintenance of the project management schedule by the project or sub-project manager becomes time consuming and cumbersome and essentially causes the schedule to drive the behavior of the manager rather than having the manager drive the project schedule and utilize the project schedule as a management tool.

Accordingly, there is a need in the art for an improved project management method and system that allows better management of a project management schedule based on user input. It is with respect to these and other considerations that the present invention has been made.

### Summary of the Invention

Embodiments of the present invention solve the above and other problems by providing a method and system for managing automated project management scheduling based on user input of contractual project milestone start and/or finish data. Generally described, according to aspects of the invention, a project management system scheduling engine may be managed by provision of contractual start/finish data including restarting the scheduling engine at any point in a project management schedule based on the contractual scheduling data provided by a user of the schedule. Thus, a user of the schedule may manage one or more portions of the overall project management schedule without manually amending the schedule or breaking scheduling dependencies to cause the schedule to arbitrarily fit an initial schedule.

More particularly, according to aspects of the invention, project management scheduling data for a given project is provided to a project management system scheduling engine for calculation and display of a project management schedule for the given project. Scheduling data provided to the scheduling engine may include scheduled start/finish dates for project milestones and individual tasks comprising project milestones, as well as, scheduling dependencies and resource constraints.

At the initial preparation of the project management schedule or as required during the progression of the project management schedule, managers of individual milestones or phases comprising the overall project may provide contractual start and finish dates for those milestones or phases to the scheduling engine to allow the managers to control the scheduling engine notwithstanding any completion slippage projected or periodically experienced for one or more tasks comprising a given project milestone or phase. For example, if a manager knows that a particular project milestone will be completed by a certain date notwithstanding any slippage experienced for any task comprising the milestone, the manager may provide a contractual finish date for the milestone. According to an aspect of the invention, the scheduling engine will honor the contractual finish date and will calculate and schedule all subsequent depending project milestones based on the contractual finish date notwithstanding the slippage of one or more tasks comprising the first milestone where such slippage would otherwise require the scheduling engine to recalculate the entire project management schedule and move all project milestones and associated tasks out in response to the slipping one or more tasks in the first milestone.

If the manager provides a contractual project milestone finish date during the progression of a project management schedule in response to the slippage of one or more tasks comprising the milestone, the scheduling engine replaces the originally or presently calculated (based on the slippage) finish date for the milestone with the contractual finish date. The scheduling engine restarts the schedule from the end of the contractual finish date and schedules the pending project milestones coming after the first milestone from the contractual finish date. Similarly, if a manager provides a contractual finish date for a given project milestone that is earlier than an initially provided or calculated finish date for the milestone, the schedule is restarted from the provided contractual finish date, and the start dates and finish dates for all pending milestones and tasks coming after the contractual finish date are recalculated based on the contractual finish date.

According to other aspects of the invention, the scheduling engine may track the schedule based on the provided contractual start and/or finish dates, and the scheduling engine may separately track the project schedule based on originally provided start and finish dates and based on calculation of the schedule to include any task slippage without regard to the contractual finish dates provided by individual managers/users. Thus, a given manager may review the schedule as calculated based on the provided contractual dates, and the manager may review the schedule as it would otherwise proceed if the contractual dates are not met and the slippage of one or more tasks does cause slippage of other milestones or tasks comprising the overall project.

These and other features and advantages, which characterize the present invention, will be apparent from a reading of the following detailed description and a review of the associated drawings. It is to be understood that both the foregoing general description and the following detailed description are exemplary and explanatory only and are not restrictive of the invention as claimed.

### Brief Description of the Drawings

Fig. 1 illustrates an exemplary computing operating environment for embodiments of the present invention.
Fig. 2 illustrates a simplified block diagram of the relationship between project data provided to a project management application and scheduling engine and the preparation of a project management schedule.
Fig. 3 is a simplified block diagram illustrating a project management schedule according to embodiments of the present invention.
Fig. 4 is a flow diagram showing an illustrative routine for managing a project management schedule according to embodiments of the present invention.

### Detailed Description

As briefly described above, embodiments of the present invention are directed to methods and systems for managing a project management schedule based on user input of contractual start and/or finish data for project milestones or phases. The project management system scheduling engine first schedules all tasks comprising milestones of an overall project so that any user or manager viewing the results of the constructed schedule will see the start and finish of various tasks comprising the overall project schedule based on provided start and finish dates for milestones and tasks of the project and based on dependencies between various milestones and tasks of the project and based on various constraints provided to the scheduling engine for milestones and tasks comprising the project. Either at initial project scheduling preparation, or periodically during the progression of the project schedule, contractual start and/or finish dates may be provided to the scheduling engine for one or more milestones comprising the overall project. The scheduling engine restarts the project schedule based on the contractual finish dates, and any tasks or milestones depending from the milestone for which a contractual finish date has been provided are scheduled based on the contractual finish date rather than on a calculated finish date calculated based on constraints, dependencies, or any scheduling slippage associated with individual tasks comprising the first milestone.

In the following detailed description, references are made to the accompanying drawings that form a part hereof, and in which are shown by way of illustrations specific embodiments or examples. These embodiments may be combined, other embodiments may be utilized, and structural changes may be made without departing from the spirit or scope of the present invention. The following detailed description is therefore not to be taken in a limiting sense and the scope of the present invention is defined by the appended claims and their equivalents.

### OPERATING ENVIRONMENT

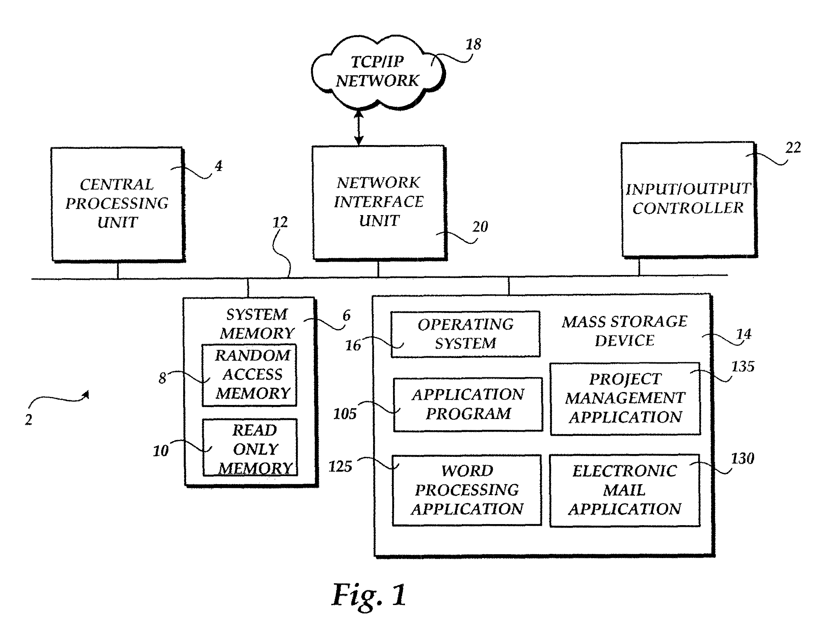

Referring now to the drawings, in which like numerals represent like elements through the several figures, aspects of the present invention and the exemplary operating environment will be described. Fig. 1 and the following discussion are intended to provide a brief, general description of a suitable computing environment in which the invention may be implemented. While the invention will be described in the general context of program modules that execute in conjunction with an application program that runs on an operating system on a personal computer, those skilled in the art will recognize that the invention may also be implemented in combination with other program modules.

Generally, program modules include routines, programs, components, data structures, and other types of structures that perform particular tasks or implement particular abstract data types. Moreover, those skilled in the art will appreciate that the invention may be practiced with other computer system configurations, including handheld devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote memory storage devices.

Turning now to Fig. 1, an illustrative computer architecture for a personal computer 2 for practicing the various embodiments of the invention will be described. The computer architecture shown in Fig. I illustrates a conventional personal computer, including a central processing unit 4 ("CPU"), a system memory 6, including a random access memory 8 ("RAM") and a read-only memory ("ROM") 10, and a system bus 12 that couples the memory to the CPU 4. A basic input/output system containing the basic routines that help to transfer information between elements within the computer, such as during startup, is stored in the ROM 10. The personal computer 2 further includes a mass storage device 14 for storing an operating system 16, application programs, such as the application program 205, and data.

The mass storage device 14 is connected to the CPU 4 through a mass storage controller (not shown) connected to the bus 12. The mass storage device 14 and its associated computer-readable media, provide non-volatile storage for the personal computer 2. Although the description of computer-readable media contained herein refers to a mass storage device, such as a hard disk or CD-ROM drive, it should be appreciated by those skilled in the art that computer-readable media can be any available media that can be accessed by the personal computer 2.

By way of example, and not limitation, computer-readable media may comprise computer storage media and communication media. Computer storage media includes volatile and non-volatile, removable and non-removable media implemented in any method or technology for storage of information such as computer-readable instructions, data structures, program modules or other data. Computer storage media includes, but is not limited to, RAM, ROM, EPROM, EEPROM, flash memory or other solid state memory technology, CD-ROM, DVD, or other optical storage, magnetic cassettes, magnetic tape, magnetic disk storage or other magnetic storage devices, or any other medium which can be used to store the desired information and which can be accessed by the computer.

According to various embodiments of the invention, the personal computer 2 may operate in a networked environment using logical connections to remote computers through a TCP/IP network 18, such as the Internet. The personal computer 2 may connect to the TCP/IP network 18 through a network interface unit 20 connected to the bus 12. It should be appreciated that the network interface unit 20 may also be utilized to connect to other types of networks and remote computer systems. The personal computer 2 may also include an input/output controller 22 for receiving and processing input from a number of devices, including a keyboard or mouse (not shown). Similarly, an input/output controller 22 may provide output to a display screen, a printer, or other type of output device.

As mentioned briefly above, a number of program modules and data files may be stored in the mass storage device 14 and RAM 8 of the personal computer 2, including an operating system 16 suitable for controlling the operation of a networked personal computer, such as the WINDOWS operating systems from Microsoft Corporation of Redmond, Washington. The mass storage device 14 and RAM 8 may also store one or more application programs. In particular, the mass storage device 14 and RAM 8 may store an application program 105 for providing a variety of functionalities to a user. For instance, the application program 105 may comprise many types of programs such as a word processing application program, a spreadsheet application, an electronic mail application 130, a database application and the like. According to embodiments of the present invention, a project management application 135 is included for preparing project management schedules as described herein. An example project management application for use in accordance with the present invention is PROJECT manufactured by Microsoft Corporation.

As described herein, an overall project management schedule may be comprised of a parent/master project schedule and one or more hierarchically-related sub-projects. According to embodiments of the present invention, the overall or parent project management schedule and individual and independently manageable sub-project management schedules may be maintained on a project server/database that may be accessed by users of the project management schedules described herein. Users of the project management schedules may access the project server/database via a distributed computing environment such as the Internet or an intranet. When a change or proposed change in a given project of sub-project schedule requires notification to the owner/manager of an affected project management schedule or related sub-project management schedule, a project management application 135 at the project server/database may call a communications application such as an electronic mail application 130 and cause an appropriate notification message to be sent to the affected party. For further description of project management scheduling and communication of scheduling changes between related project or sub-project schedules, see United States Patent Application, entitled "Hierarchical Projects in a Computer-Enabled Project Management Method and System," applicant matter number 308112.1, attorney/agent matter number 600001.0342US01, which is incorporated herein by reference as if fully set out herein.

### OPERATION

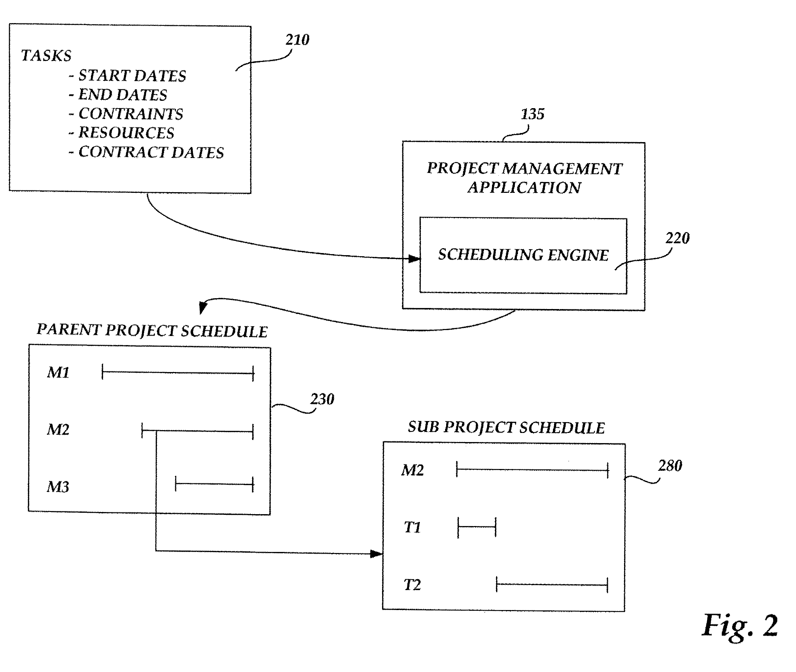

Figure 2 illustrates a simplified block diagram of the relationship between project data provided to a project management application and scheduling engine and the preparation of a project management schedule. As described herein, a project management application 135 having a scheduling engine 220 may be utilized for automating the preparation of a project management schedule for scheduling one or more milestones comprising an overall project and for scheduling individual tasks comprising each milestone. For example, if the project management application 135 and scheduling engine 220 is utilized for preparing a project management schedule for the construction of a house, the project may include three milestones where the first milestone includes general framing, the second milestone includes electrical and plumbing work, and the third milestone includes drywall and finishing work. Each milestone may comprise one or more tasks required for completing the respective milestone. For example, a general framing milestone may include a first task associated with building a foundation for the house, a second task may be provided for framing the house, and a third task may be provided for applying a roof to the house.

For preparation of a project management schedule, as described for the example house construction project, scheduling information 210 must be provided by a manager of the project to the project management application. As illustrated in Fig. 2, scheduling information 210 may include information on each of a variety of tasks comprising the milestones of the overall project such as work durations for individual tasks, resource allocations including labor and material, constraints on the performance of various tasks, and dependencies between tasks and milestones. Once the scheduling engine receives the scheduling information, start/finish dates for all tasks are calculated. For example, a constraint on the performance of a task may stipulate that a given task must be completed prior to the commencement of a different task. Or, a constraint might include a stipulation that a given task must be completed during a given time period. For example, a local building code may require that materials may only be shipped to a building site during certain hours of a day to prevent traffic congestion. Dependencies provided to the project management application may include a stipulation that a second milestone may not commence until the completion of a first milestone. Dependencies may also be provided for individual tasks comprising project milestones where one task may not be started until the completion of a previous task.

Once the tasks (projects and sub-projects using your terms), resources (e.g., a list of resources and availability and utilization), constraints and dependency data are provided to the project management application, the scheduling engine 220 may calculate a project management schedule 230 illustrated in Fig. 2. The project management schedule 230 is illustrative of a parent or overall project management schedule wherein each of the required milestones or phases of the overall project are illustrated and displayed in a visual graphical bar format. For example, the display format illustrated in Fig. 2 is illustrative of a Gantt style project management schedule. As should be understood by those skilled in the art, other schedule display styles may be utilized by the scheduling engine for displaying a given prepared project management schedule. For example, the project management schedule may be displayed as data in an electronic spreadsheet.

The milestone graph bars illustrated in the parent project schedule 230 are illustrative of project summary tasks. Summary tasks include a summarization or "roll up" of all tasks or sub-tasks required for completing a given milestone. For example, the milestone (M2) illustrated in the parent project schedule 230 and the hierarchically-related sub-project schedule 280 include all the scheduling information comprising the milestone M2. For example, the milestone M2 is a summary task including all the scheduling data, start dates, finish dates, constraints, resources and dependencies of the first and second tasks (T1, T2) comprising the second milestone M2 illustrated in the sub-project schedule 280. Thus, the duration of a given milestone (summary task) begins at the earliest task (T1) included in the milestone and ends at the end of the latest ending task (T2) included in the milestone.

Referring still to Fig. 2, a sub-project schedule 280 is illustrated depending from the second milestone of the parent project schedule. The sub-project schedule 280 illustrates the associated second milestone from the parent project schedule 230, and further illustrates two tasks required for completing the second milestone. For example, if the second milestone includes electrical work and plumbing work associated with a house construction project, a first task (T1) illustrated in the sub-project schedule 280 may be for completion of plumbing work, and a second task (T2) illustrated in the sub-project schedule 280 may be for electrical work. As illustrated in Fig. 2, the sub-project schedule 280 is shown in a hierarchal relationship to the parent project schedule. That is, the sub-project schedule 280 is illustrated as a child project to the parent project 230. As should be understood, additional sub-projects may be depended from the parent project schedule associated with other milestones contained in the parent project schedule 280. Similarly, additional sub-project schedules may be depended from tasks contained in the sub-project schedule 280 to further breakdown the overall project into smaller sub-projects as may be performed by different managers of different portions of the work required for completing the overall project.

As briefly described above, the scheduling engine 220 of the project management application 135 is responsible for calculation and construction of the project schedules and sub-project schedules based on the information provided to the scheduling engine. If, for example, the second task of the sub-project schedule 280 is dependent upon completion of the first task of the sub-project 280, and a dependency is provided to the scheduling engine that the second task may not commence until completion of the first task, then the scheduling engine 220 will automatically recalculate the project management schedule and reconstruct the displayed project management schedules if a work slippage occurs in the first task that causes the second task to start at a later date. Thus, the scheduling engine 220 maintains the constraints and dependencies applied to each of the milestones and tasks associated with the project. However, as described above, such automatic recalculation and reconstruction of the project management schedule tends to reduce the usefulness of the project management schedule to a mere snapshot of the presently scheduled start and finish dates of each of the tasks, sub-tasks or milestones comprising an overall project. In order to prevent this automatic recalculation of the entire project schedule, and in order to individually manage a given sub-project, the manager of a given milestone must artificially alter the data provided to the scheduling engine to force the scheduling engine to present data in a certain manner, or the manager must break the dependency of his/her portion of the project from other portions of the project.

According to embodiments of the present invention, this problem is solved by allowing the manager of a given project milestone to provide contractual start and/or finish dates for a given milestone to the scheduling engine in order to instruct the scheduling engine that a given milestone will be completed by the contractual finish date notwithstanding any slippage associated with any tasks comprising the given milestone summary task. For example, the manager of the second milestone, described above, and illustrated in the sub-project schedule 280, may know that even if the first task of his/her project begins to slip past the originally scheduled finish date, the manager will increase any required resources, for example, labor, equipment, financing, etc., required to cause the first task to be completed by a date certain. Accordingly, rather than manually alter the ending date of the slipping task to force the associated milestone to finish on time, or rather than breaking the dependency between the first task and the second task to prevent the associated milestone summary task from being automatically recalculated and extended by the scheduling engine, the manager provides the scheduling engine with a contractual finish date for the second milestone. For example, if the second milestone originally had a total duration of four weeks, but based on slippage occurring in one of the tasks of the milestone, the presently calculated duration of the second milestone is six weeks, the manager of the second milestone may nonetheless provide a contractual finish date to the scheduling engine of four weeks.

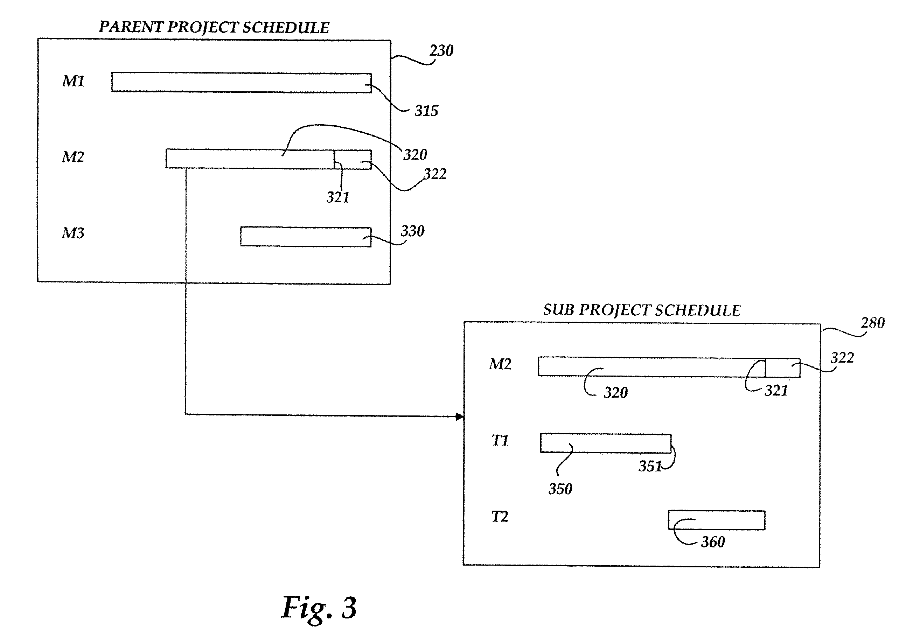

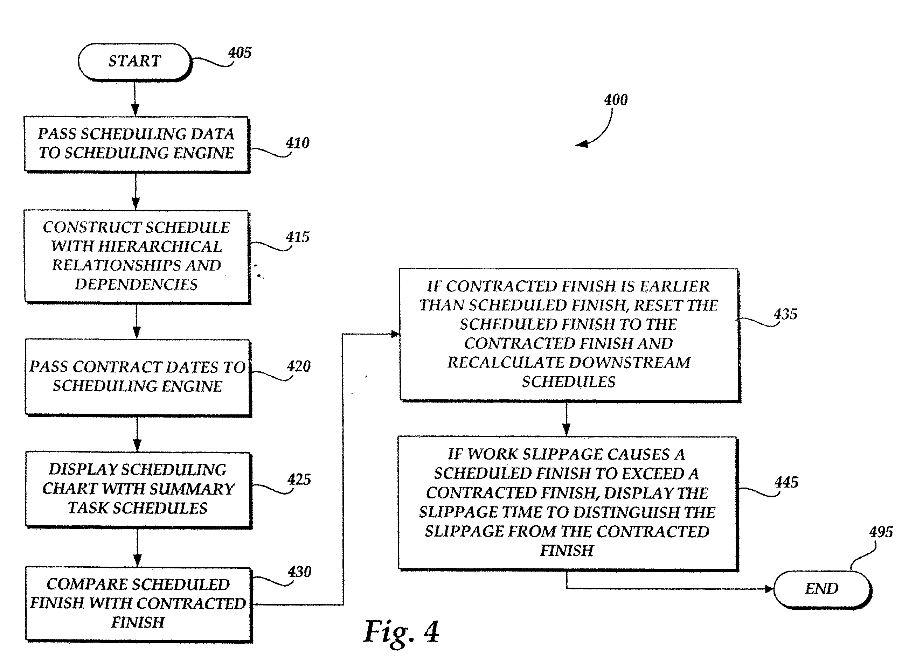

In response to the contractual finish date, the scheduling engine will reset the duration of the summary task associated with the second milestone to the duration associated with the contractual finish date (for example, four weeks). The scheduling engine will then restart the project management schedule beginning at the end of the contractual finish date and reschedule subsequent milestones and related tasks as required based on the contractual finish date rather than the calculated finish date that is calculated based on the slippage occurring in the second milestone. As described below with reference to Figs. 3 and 4, according to embodiments of the present invention, the scheduling engine tracks the project management schedule according to contractual start and/or finish dates provided by managers/users of the project management schedule, and the scheduling engine tracks a calculated project management schedule that is calculated based on all actual performance data including slippages associated with various tasks throughout the project management schedule. A given milestone manager may review the project management schedule resulting from the provision of contractual start and/or finish dates, and the project manager may review the project management schedule without the benefit of the contractual start and/or finish dates. By reviewing both the calculated schedule and the contractual schedule, project managers may be assisted in project planning and risk analysis associated with project delays.

Accordingly, the project management schedules serve as useful tools to the manager because the manager is able to guarantee performance of his/her milestone by a date certain to all others concerned with the completion of the overall project and of individual sub-projects, but the manager also may review a project management schedule illustrating the result of work slippages or resource allocation problems if the manager is not able to complete his/her project by the contractual finish date. The manager may utilize the project management schedule to determine the need for additional resources, labor or materials needed for completing his/her milestone as required by the contractual finish date.

According to alternate embodiments of the present invention, an initial project management schedule may be constructed by providing the scheduling engine all required scheduling data, but by providing the scheduling engine a finish date for the overall project rather than a start date for the project. Based on the provided finish date for the project and based on provided estimated durations of included milestones and tasks and based on provided constraints and dependencies, the scheduling engine may calculate a project management schedule for the project beginning at the finish of the project by calculating projected start dates for milestones and tasks comprising the project. If a given milestone manager wishes to guarantee that his/her milestone will start on a certain date, prior to a calculated start date, notwithstanding performance slippages that cause the calculated start date to be earlier, the manager may submit a contractual start date. Thus, the scheduling engine will restart the project management schedule based on the contractual start date and will recalculate the finish dates and corresponding start dates of other milestones affected by the start of the contractual start date milestone. For example, if milestones beginning prior to the given milestone must start earlier than originally planned due to work slippages or other problems, a contractual start date may cause the scheduling engine to calculate the finishes and corresponding starts of those milestones based on the contractual start date provided by the given milestone manager. As in the case of contractual finish dates, the scheduling engine may track both the calculated schedule and the contractual schedule to assist project managers with planning and risk analysis associated with project delays.

Having described an exemplary computing operating environment for the present invention with respect to Fig. 1, and having described operation of embodiments of the present invention with respect to Fig. 2, an example operation of embodiments of the present invention will be described with reference to Figs. 3 and 4. Fig. 3 is a simplified block diagram illustrating a project management schedule according to embodiments of the present invention, and Fig. 4 is a flow diagram showing an illustrative routine for managing a project management schedule according to embodiments of the present invention. For purposes of example, consider that a project management schedule is prepared by the project management application 135 and scheduling engine 220 for the construction of a house, as described above. Referring to Fig. 4, the routine 400 begins at start block 405 and proceeds to block 410 where the scheduling data provided by the overall project manager and by any sub-project managers is passed to the scheduling engine 220 of the project management application 135, as described herein. For example, referring to Fig. 3, the project manager of the overall construction project provides project data including the start date for the overall project and durations or estimated durations for milestones and tasks comprising the project. Along with a starting date for the project and estimated durations for each milestone, the project manager may enter constraints and dependencies associated with each of the milestones. As described above, the scheduling engine calculates a project schedule for the project from the information provided by the manager including start/finish dates for each milestone and associated task.. According to the present example, the first milestone M1 may include general framing of the house, the second milestone M2 may include electrical and plumbing work for the house, and the third milestone M3 may include dry walling and general finishing work for the house.

At block 415 (and referring also to Fig. 3), the parent project schedule 230 and any sub-project schedules 280 associated with each of the milestones of the overall parent project are calculated and constructed by the scheduling engine. According to embodiments of the present invention, each of the sub-projects is hierarchaly related to the parent project based on milestones in the parent or overall project to which each sub-project depends or is otherwise related. At block 420, the manager of a given milestone or the manager of the overall project may pass contract start and/or finish dates to the scheduling engine, as described above. As should be understood, a given milestone manager may submit contract start and/or finish dates to the scheduling engine during the initial preparation of the project management schedule so that the contract dates for a given milestone will control operation of the scheduling engine as described above with reference to Fig. 2 from the outset of preparation of the project management schedules regardless of projected or real slippage in any tasks comprising the milestone for which contract dates are submitted. Alternatively, the manager of a given milestone may initially submit only a project start date and milestone/task durations along with other constraints, resources and dependency information without submitting contract start and/or finish dates. Thus, the manager may wait until a scheduling problem arises, for example, slippage of a task required for the manager's milestone, before the manager submits a contractual start and/or finish date to the scheduling engine for restarting and recalculating the scheduling engine, as described above with reference to Fig. 2

At block 425, the scheduling engine calculates a project management schedule based on all of the information passed to the scheduling engine by the various project and sub-project managers, and the project management application 135 draws and displays the associated project management schedules, as illustrated in Fig. 3. As described above, the project management schedules illustrated in Fig. 3 are Gantt style project management schedules, but other types of displayable project management schedules may be utilized. Referring to Fig. 3, the project management schedules are displayed with graphical bars illustrating milestone and task durations. For example, referring to the parent project management schedule 230, a graphical bar 315 is provided for illustrating the first milestone of the specified project. A graphical bar 320 is displayed for illustrating the duration of a second milestone, and a graphical bar 330 is displayed for illustrating the duration of a third milestone. The sub-project management schedule 280 is shown in hierarchical relationship to the second milestone displayed in the parent project management schedule. The graphical bar 320 is displayed in the sub-project management schedule 280 to show the same project duration as the graphical bar 320 in the parent project management schedule.

The graphical bars illustrated in the parent project management schedule 230 and the graphical bar 320 illustrated for the second milestone in the sub-project management schedule 280 are illustrative of summary tasks, which represent a summarization for "roll up" of the durations, resources, dependencies, and constraints of tasks comprising a given milestone. For example, referring to the sub-project management schedule 280, a graphical bar 350 is displayed for illustrating a first task comprising the second milestone. A graphical bar 360 is displayed for illustrating a second task comprising the second milestone. The length of the graphical bars illustrated in the project management schedules is illustrative of the duration of the milestone or associated task. The relative positions of tasks such as the first and second tasks illustrated in the sub-project management schedule 280 are illustrative of the sequences with which each task is initiated and finished. For example, the graphical bar 360 illustrating the second task is shown beginning at the end point 351 of the graphical bar 350. This representation is illustrative of the fact that the second task may not commence until the completion of the first task. Additionally, the overall length of the graphical bar 320 illustrated in the sub-project schedule 280 is equal to the combined lengths of the graphical bars 350 and 360 illustrative of the first and second tasks.

For purposes of description of an operation of an embodiment of the present invention, consider that a work slippage of the first task (plumbing work) of the second milestone has occurred causing the first task to be delayed by a period of two weeks. Consider further, for example, that at block 415 the manager of the second milestone determined that the second milestone would be completed on time notwithstanding the two-week work slippage associated with the first task under the second milestone. Thus, at block 415, the manager of the second milestone enters a contractual finish date for the second milestone equal to the pre-slippage deadline. Consequently, the contractual finish date submitted by the manager to the scheduling engine has a finish date of two weeks prior to the presently calculated finish date. That is, because the first task has slipped by two weeks, and because the second task may not begin until completion of the first task, the two-week work slippage will be calculated by the scheduling engine to cause the second milestone M2 to slip by two weeks. Without use of the contractual finish date, the scheduling engine of the project management application will automatically recalculate the starts and finishes of all milestones and associated tasks coming after the slipping milestone which are dependent upon the slipping milestone or constrained by completion of the second milestone.

At block 430, the scheduling engine compares the calculated scheduled finish of the second milestone (including the example two-week work slippage) with the contractual finish date submitted by the manager of the second milestone. At block 435, if the contractual finish date is earlier than the calculated scheduled finish, the scheduling engine, resets the scheduled finish of the second milestone to the contractual finish date and recalculates initiation of milestones and associated tasks coming after the second milestone based on the contractual finish. That is, the scheduling engine restarts the project management schedule at the end of the contractual finish date and disregards additional duration of the second milestone M2 associated with the calculated scheduled finish time of the second milestone M2.

After the scheduling engine restarts the project management schedule based on a contractual start and/or finish date, as described herein, a notification may be sent to managers of milestones and associated tasks whose schedules are affected by the restart of the project management schedule in response to the contractual start and/or finish date. For a detailed description regarding notifications to managers/owners of project management milestones and/or tasks affected by changes in a project management schedule, see the aforementioned United States Patent Application, entitled "Hierarchical Projects in a Computer-Enabled Project Management Method and System," applicant matter number 308112.1, attorney/agent matter number 600001.0342US01, which is incorporated herein by reference as if fully set out herein.

At block 445, if work slippage causes a scheduled finish to exceed the contractual finish, as described above, the slippage time will be calculated and stored and may be displayed, as illustrated in Fig. 3, to distinguish the slippage time from the contractual finish date. As described above, according to embodiments of the present invention, the scheduling engine may track the project management schedule as recalculated and restarted according to the contractual start and/or finish dates supplied by the schedule managers, and the scheduling engine may track the calculated project management schedule, including all delays and/or work slippages, without regard to the contractual start and/or finish dates. By tracking both versions of the project management schedule, information may be displayed to a user of the project management schedules to allow the user to review both schedules simultaneously. For example, a manager of the second milestone, described herein, may desire to see the results of the work slippage occurring in the first task comprising the second milestone even though the manager has submitted a contractual finish date to prevent delays in downstream milestones and/or tasks.

Referring to Fig. 3, according to one embodiment of the present invention, the work slippage or other delay associated with the calculated finish date for a given milestone and/or task may be illustrated by an additional portion added to the graphical schedule bars illustrating milestones and tasks. For example, referring to the parent project schedule 230, an additional portion 322 is illustrated beyond the contractual finish date 321 to illustrate the duration of any work slippage and/or delay associated with the second milestone. Accordingly, the manager of the second milestone, for example, may quickly review the contractual duration of the second milestone by looking at the graphical bar displayed in the project management schedule, but the manager also may quickly review the result of the work slippage or other delay occurring in the second milestone if the contractual finish date is not met.

According to one embodiment of the present invention, the portion of the graphical bar representing delay associated with the calculated finish date as compared to the contractual finish date may be displayed in a color different from the remaining part of the bar. For example, the graphical bar 320 illustrating the contractual duration of the second milestone may be displayed in black color while the delay portion of the graphical bar 322 may be displayed with a different color such as the color red to quickly alert the reviewing manager of the implication of not completing the milestone by the contractual date.

According to embodiments of the present invention, only the manager of a given milestone, such as the manager of the second milestone in this example, may see a display associated with both the contractual finish date and the calculated scheduled finish date. That is, managers of milestones and associated tasks coming after the second milestone (in the present example case), will not see any graphical representation associated with delayed milestones, because the scheduling engine will have restarted the schedules associated with those milestones at the end of the contractual finish date supplied for the second milestone. Alternatively, each user of the project management schedule may be provided access to both schedules (contractual and calculated) for all schedules associated with the parent project management schedule. According to yet another embodiment, only contractual finish dates may be displayed, but users of the project management schedules and sub-project management schedules may disable application of the contractual start and/or finish dates in order to review the calculated scheduled project management schedules without regard to contractual start and/or finish dates submitted to the scheduling engine by various managers of milestones and associated tasks, as described herein.

As described herein, methods and systems are provided for improved management of project schedules including a method and system for restarting a project management system scheduling engine based on user input of contractual start and/or finish data. It will be apparent to those skilled in the art that various modifications or variations may be made in the present invention without departing from the scope or spirit of the invention. Other embodiments of the invention will be apparent to those skilled in the art from consideration of the specification and practice of the invention disclosed herein.

## Claims

1. A method of managing a project management schedule based on user input of contractual project performance data, comprising:
receiving scheduling data associated with a project;
generating a first project management schedule based on the received scheduling data including generating a project management schedule for each of one or more project milestones comprising the project;
receiving a contractual finish date for a given project milestone; and
if the generated project management schedule for the given project milestone slips past the contractual finish date for the given project milestone, restarting the project management schedule from the end of the contractual finish date for the given project milestone; and
generating a revised project management schedule for any project milestones coming after the given project milestone based on the contractual finish date for the given project milestone.

2. The method of Claim 1, further comprising, storing the first project management schedule and the revised project management schedule for displaying, planning, and risk analysis.

3. A method of Claim 1, further comprising displaying the revised project management schedule.

4. The method of Claim 3, whereby displaying the revised project management schedule includes displaying a first portion of the revised project management schedule prior to the end of the contractual finish date based on the received scheduling data, and displaying a second portion of the revised project management schedule after the end of the contractual finish date based on contractual finish of the given project milestone.

5. The method of Claim 4, further comprising displaying an un-revised project management schedule based on the received scheduling data without regard to the contractual finish date.

6. The method of Claim 3, further comprising displaying an indication in the second portion of delays in the project management schedule that will occur if the contractual finish date is not met for the given project milestone.

7. The method of Claim 6, prior to displaying an indication in the second portion of delays in the project management schedule that will occur if the contractual finish date is not met for the given project milestone, further comprising:
tracking the first project management schedule based on received scheduling data and including scheduling associated with any delays in the performance of any milestones comprising the project; and
tracking the revised project management schedule based on received scheduling data and any received contractual finish dates for any project milestones comprising the project where the any contractual finish dates are earlier than scheduled finish dates for corresponding project milestones.

8. A method of managing automated project management scheduling based on user input of contractual project milestone start and/or finish data, comprising:
providing scheduling data for a project to a project management system scheduling engine for calculation and display of a project management schedule for the given project;
providing a contractual finish date to the scheduling engine for a given project milestone of the project;
determining whether the contractual finish date for the given project is earlier than a calculated finish date for the given project based on the scheduling data for the project and based on performance data for the given project; and
if the contractual finish date is earlier than the calculated finish date, causing the scheduling engine to restart the project management schedule at the contractual finish date for any project milestones and related project tasks coming after the given project.

9. The method of Claim 8, whereby the scheduling data provided to the scheduling engine includes scheduled start and finish dates for project milestones and individual tasks comprising project milestones and scheduling dependencies and resource constraints associated with any project tasks comprising the project.

10. The method of Claim 9, whereby prior to causing the scheduling engine to restart the project management schedule at the contractual finish date for any project milestones and related project tasks coming after the given project, further including causing the scheduling engine to ignore the calculated finish date and restart the project management schedule at the contractual finish date.

11. The method of Claim 10, further comprising;
tracking a first project management schedule based on the calculated finish date without regard to the contractual finish date showing any project delays associated with the calculated finish date; and
tracking a second project management schedule based on restarting the project management schedule at the contractual finish date for any project milestones and related project tasks coming after the given project.

12. The method of Claim 11, further comprising generating a combined project management schedule showing the second project management schedule and showing attributes of the first project management schedule associated with any project delays for alerting a user of the combined project management schedule of the affect of any project delays if the contractual finish date is not fulfilled.

13. A computer readable medium containing computer-executable instructions which when executed by a computer perform a method of managing a project management schedule based on user input of contractual project performance data, comprising:
receiving scheduling data associated with a project;
generating a first project management schedule based on the received scheduling data including generating a project management schedule for each of one or more project milestones comprising the project;
receiving a contractual finish date for a given project milestone; and
if the generated project management schedule for the given project milestone slips past the contractual finish date for the given project milestone, restarting the project management schedule from the end of the contractual finish date for the given project milestone; and
generating a revised project management schedule for any project milestones coming after the given project milestone based on the contractual finish for the given project milestone.

14. The method of Claim 13, further comprising, storing the first project management schedule and the revised project management schedule for displaying, planning, and risk analysis.

15. A method of Claim 13, further comprising displaying the revised project management schedule.

16. The method of Claim 15, whereby displaying the revised project management schedule includes displaying a first portion of the revised project management schedule prior to the end of the contractual finish date based on the received scheduling data, and displaying a second portion of the revised project management schedule after the end of the contractual finish date based on contractual finish of the given project milestone.

17. The method of Claim 16, further comprising displaying an un-revised project management schedule based on the received scheduling data without regard to the contractual finish date.

18. The method of Claim 15, further comprising displaying an indication in the second portion of delays in the project management schedule that will occur if the contractual finish date is not met for the given project milestone.

19. The method of Claim 18, prior to displaying an indication in the second portion of delays in the project management schedule that will occur if the contractual fmish date is not met for the given project milestone, further comprising:
tracking the first project management schedule based on received scheduling data and including scheduling associated with any delays in the performance of any milestones comprising the project; and
tracking the revised project management schedule based on received scheduling data and any received contractual finish dates or any project milestones comprising the project where the any contractual finish dates are earlier than scheduled finish dates for corresponding project milestones.

20. A computer-readable medium containing computer-executable instructions which when executed by a computer perform a method of managing automated project management scheduling based on user input of contractual project milestone start and/or finish data, comprising:
providing scheduling data for a project to a project management system scheduling engine for calculation and display of a project management schedule for the given project;
providing a contractual finish date to the scheduling engine for a given project milestone of the project;
determining whether the contractual finish date for the given project is earlier than a calculated finish date for the given project based on the scheduling data for the project and based on performance data for the given project; and
if the contractual finish date is earlier than the calculated finish date, causing the scheduling engine to restart the project management schedule at the contractual finish date for any project milestones and related project tasks coming after the given project.

21. The method of Claim 20, whereby the scheduling data provided to the scheduling engine includes scheduled start and finish dates for project milestones and individual tasks comprising project milestones and scheduling dependencies and resource constraints associated with any project tasks comprising the project.

22. The method of Claim 21, whereby prior to causing the scheduling engine to restart the project management schedule at the contractual finish date for any project milestones and related project tasks coming after the given project, further includes causing the scheduling engine to replace a calculated finish date with the contractual finish date.

23. The method of Claim 22, further comprising;
tracking a first project management schedule based on the calculated finish date without regard to the contractual finish date showing any project delays associated with the calculated finish date; and
tracking a second project management schedule based on restarting the project management schedule at the contractual finish date for any project milestones and related project tasks coming after the given project.

24. The method of Claim 23, further comprising generating a combined project management schedule showing the second project management schedule and showing attributes of the first project management schedule associated with any project delays for alerting a user of the combined project management schedule of the affect of any project delays if the contractual finish date is not fulfilled.

25. The method of Claim 23, further comprising, storing the first project management schedule and the second project management schedule for displaying, planning, and risk analysis.

26. A method of managing a project management schedule based on user input of contractual project performance data, comprising:
receiving scheduling data associated with a project;
generating a first project management schedule based on the received scheduling data including generating a project management schedule for each of one or more project milestones comprising the project;
receiving a contractual start date for a given project milestone; and
if the generated project management schedule for the given project milestone starts prior to the contractual start date for the given project milestone, restarting the project management schedule from the beginning of the contractual start date for the given project milestone; and
generating a revised project management schedule for any project milestones starting before the given project milestone based on the contractual start date for the given project milestone.

27. The method of Claim 26, further comprising, storing the first project management schedule and the revised project management schedule for displaying, planning, and risk analysis.

28. A method of Claim 26, further comprising displaying the revised project management schedule.

29. The method of Claim 28, whereby displaying the revised project management schedule includes displaying a first portion of the revised project management schedule corresponding to a calculated start date based on the received scheduling data, and displaying a second portion of the revised project management schedule corresponding to the contractual start date for the given project milestone.

30. The method of Claim 27, prior to storing the first project management schedule and the revised project management schedule for displaying, planning, and risk analysis, further comprising:
tracking the first project management schedule based on received scheduling data and including scheduling associated with any delays in the performance of any milestones comprising the project; and
tracking the revised project management schedule based on received scheduling data and any received contractual start dates for any project milestones comprising the project where the any contractual start dates are later than scheduled start dates for corresponding project milestones.
